# EUROPEAN PATENT SPECIFICATION

(11) **EP 3 348 352 B1**
(45) Date of publication and mention of the grant of the patent: **24.06.2020**
(21) Application number: 18151289.8
(22) Date of filing: 11.01.2018
(51) Int. Cl.: B24D 3/00, B24B 7/18, B24D 7/08, B24D 7/06, B29C 70/68, E04F 21/24, A47L 11/164, E04F 15/12

(54) **GRINDING PAD APPARATUS**
SCHLEIFKISSENVORRICHTUNG
APPAREIL DE TAMPON DE POLISSAGE

(30) Priority: 13.01.2017 US 201715405361
(43) Date of publication of application: 18.07.2018
(73) Proprietor: Husqvarna AB, 561 82 Huskvarna (SE)
(72) Inventor: TCHAKAROV, Tchavdar V., MONROE, MI Michigan 48162 (US)
(74) Representative: Johansson, Fredrik Kristofer

(56) References cited:
- US-A1- 2009 191 799
- US-A1- 2011 195 644
- US-A1- 2011 300 784

## Description

### TECHNICAL BACKGROUND

The disclosure relates generally to a pad assembly and more particularly to a floor grinding pad apparatus.

It is known to use fibrous pads for polishing and grinding floors within industrial or commercial buildings. Such polishing or grinding pads are ideally suited for use on concrete, terrazzo, and natural (e.g., marble), engineered and composite stone floors. Examples of such pads and the powered machines used to rotate such can be found in the following U.S. patents and patent publication numbers: 2009/0191799 entitled "Surface modifying tool adapter using a plurality of surface modifying article inserts for use in a surface modifying system" which was invented by Rivard et al. and published on July 30, 2009; 2011/0300784 entitled "Flexible and Interchangeable Multi-Head Floor Polishing Disk Assemby" which was invented by Tchakarov et al. and published on December 8, 2011; 2011/195644 entitled "Tool holder with tapered slot for a grinding machine" which was invented by Gallup et al. and published on August 11, 2011; 9,174,326 entitled "Arrangement For Floor Grinding" which issued to Ahonen on November 3, 2015; 6,234,886 entitled "Multiple Abrasive Assembly and Method" which issued to Rivard et al. on May 22, 2001; 5,605,493 entitled "Stone Polishing Apparatus and Method" which issued to Donatelli et al. on February 25, 1997; and 5,054,245 entitled "Combination of Cleaning Pads, Cleaning Pad Mounting Members and a Base Member for a Rotary Cleaning Machine" which issued to Coty on October 8, 1991.

Notwithstanding, improved floor grinding performance is desired. Furthermore, some of these prior constructions exhibit uneven wear in use which prematurely destroy the pads or cause inconsistent polishing or grinding. Moreover, floor unevenness and cracks may create only partial contact with abrasive grinding members, thereby adding extra grinding time and causing uneven grinding with some prior rigid devices.

### SUMMARY OF THE INVENTION

In accordance with the present invention, there is provided a pad apparatus as defined in the appended claims, as well as a method for manufacturing a pad apparatus as defined in the appended claims.

A workpiece abrading pad apparatus is described. According to the invention, a grinding pad apparatus employs a flexible pad, a flexible metallic reinforcement layer or ring, and multiple floor-grinding tools, which are preferably disks. A metallic reinforcement ring includes a central hole through which flexible pad is accessible. One aspect employs a spring steel reinforcement ring to which multiple diamond-based abrasive disks or dots are attached. In yet another aspect, at least one floor-contacting disk attached to a reinforcement ring includes sintered powdered metal with diamond particles mixed therein. A further aspect employs abrasive, floor-contacting disks or dots including posts or mechanical fasteners extending from backsides thereof for attachment to a reinforcing ring or layer. A method of making a grinding pad apparatus is also presented.

Preferable but non-limited aspect of this pad apparatus, taken alone or in combination, are the following:
- each of the disks comprises at least one mechanical fastener projecting from a backside thereof.
- the fastener includes a post, each of the posts extending through an associated aperture in the reinforcement layer, and a distal end of each of the posts is laterally expanded on an upper side of the reinforcement layer to mechanically attach the associated disk to the reinforcement layer.
- the flexible metallic material is spring steel.
- the pad includes fibers but is free of diamond particles; and the metallic reinforcement layer provides radial stiffness and torsional flexibility such that one of the disks may longitudinally move relative to another of the disks.
- the disks include diamond particles with a grit size at or less than 100.
- the disks include diamond particles and sintered powdered metal.
- the pad comprises foam but is free of diamond particles.
- the pad apparatus further comprises:
   ∘ an electrically or fuel powered machine adapted to simultaneously rotate multiples of the pad to grind a concrete, stone or terrazzo floor;
   ∘ the reinforcement layer allowing flexure so that all of the disks can contact the floor even when uneven floor conditions are encountered; and
   ∘ the flexible metallic reinforcement layer having a thickness no greater than 1 mm.
- the peripheral surface of the pad is circular;
- a peripheral surface of the reinforcement layer is substantially circular and has substantially a same diameter as that of the pad which are at least 7 inches (177.8 mm); and a peripheral surface of all of the disks is substantially circular with a diameter of 1.5 - 2.5 inches (38.1 mm - 50.8 mm).

In this document is further described a pad apparatus comprising:
(a) a flexible pad including a top surface, a floor facing bottom surface and a peripheral surface;
(b) a reinforcement layer attached to the bottom surface of the pad, the reinforcement layer including multiple apertures; and
(c) abrasive tools, said tools being for example disks, each comprising at least one post projecting from a backside thereof, each of the posts extending through an associated one of the apertures in the reinforcement layer.

Preferable but non-limited aspect of this pad apparatus, taken alone or in combination, are the following:
- the disks comprise diamond particles.
- the disks further comprise sintered powder metal.
- the disks are adapted to grind a concrete, stone or terrazzo floor.
- a distal end of each of the posts is laterally expanded on an upper side of the reinforcement layer to mechanically attach the associated disk to the reinforcement layer.
- each of the disks comprises a body including grooves outwardly radiating from a solid center on a floor-facing surface thereof; and the post is an integral single piece with the body.
- a lateral width of each of the posts is at least twice that of a projecting longitudinal length of each of the posts.

In this document is further described a pad apparatus comprising:
(a) a flexible pad;
(b) a reinforcement ring attached to the pad, the ring comprising spring steel;
(c) abrasive grinding tools, said tools being for example disks, attached to the ring, the disks comprising sintered powdered metal and diamond particles;
(d) an electrically powered machine adapted to rotate the pad to grind a concrete, stone or terrazzo floor; and
(e) the ring being adapted to torsionally flex for allowing all of the disks to contact against the floor even when uneven floor conditions are encountered.

Preferable but non-limited aspect of this pad apparatus, taken alone or in combination, are the following:
- the pad apparatus further comprises at least one post projecting from a backside of each of the disks.
- each of the posts is integrally connected as a single piece with the associated disk, and the posts assist in fastening the disks to the ring.
- the diamond particles are intermixed with the sintered powdered metal of the disks.
- each of the disks includes grooves on a floor-abrading surface thereof; each of the disks has a circular periphery; and there are at least six of the disks attached to the ring.
- the ring has a circular periphery concentric with a circular periphery of the pad; and the ring has a central hole through which a portion of the pad is exposed.
- the pad includes fibers but is free of diamond particles.

In this document is also described a method of manufacturing a pad apparatus as defined in appended claim 11.

Preferable but non-limited aspect of this method, taken alone or in combination, are the following:
- the method further comprises adhesively fastening the reinforcement to the pad as at least part of the attaching step (a).
- the attaching step (b) comprises deforming a distal end of a post to sandwich a portion of the reinforcement between the distal end and a backside of a disk body from which the post extends.
- the disks include sintered powdered metal and diamond particles; and there are at least six of the disks equally spaced apart on the reinforcement.
- the reinforcement has an annular ring shape with a central opening; and the disks are floor-grinding disks including diamond particles with a grit size at or less than 100.
- the method further comprises creating multiple apertures in the reinforcement, each of the apertures being aligned with the disks.
- the method further comprises attaching the pad to an electrically or fuel powered machine which rotates the pad to grind a concrete, stone or terrazzo floor; and the ring flexing to allow all of the disks to contact against the floor even when uneven floor conditions are encountered.

The present pad assembly is advantageous over traditional devices. For example, the flexible metallic reinforcement ring of the present pad apparatus advantageously allows greater and more even floor contact over worn areas and cracks due to disk-to-disk flexibility, which is expected to improve grinding performance. Furthermore, the disk post and method of manufacturing the apparatus advantageously provide a more secure attachment of components. The flexible metallic reinforcement ring, in combination with sintered powdered metal and diamond disks, provide enhanced durability during the grinding operation which is a much harsher, jarring and vibration-prone operating condition than for polishing or honing. Additional advantages and features of the present invention will be readily understood from the following description, claims and appended drawings.

### BRIEF DESCRIPTION OF THE DRAWINGS

Figure 1 is a bottom perspective view showing a grinding pad apparatus;
Figure 2 is a bottom elevational view showing a reinforcement ring and abrasive disks employed with the grinding pad apparatus;
Figure 3 is an exploded bottom perspective view showing the grinding pad apparatus;
Figure 4 is a partially exploded top perspective view showing the grinding pad apparatus including a powered grinding machine;
Figure 5 is a cross-sectional view, taken along line 5 - 5 of Figure 2, showing the grinding pad apparatus in a partially assembled condition;
Figure 6 is a cross-sectional view, taken along line 6 - 6 of Figure 1, showing the grinding pad assembly in a fully assembled condition; and
Figure 7 is a flow chart showing a method of manufacturing the grinding pad apparatus.

### DETAILED DESCRIPTION

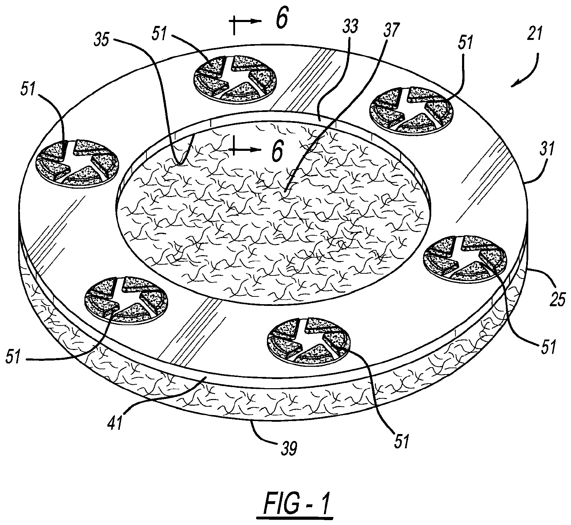

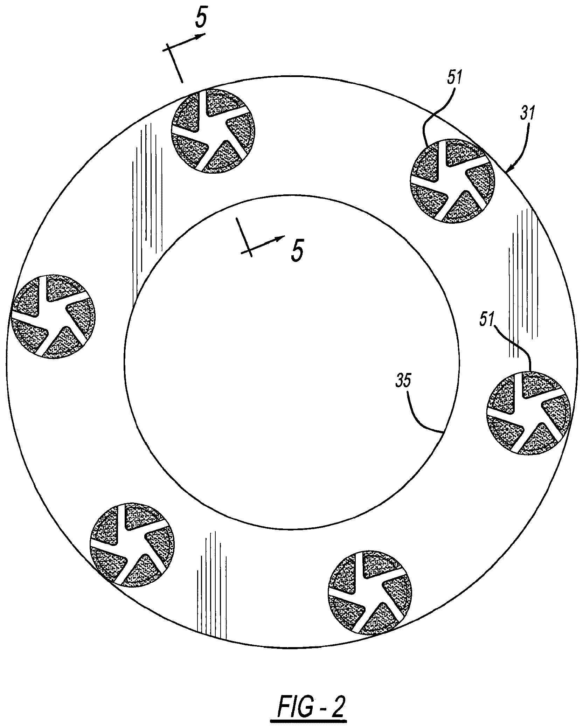

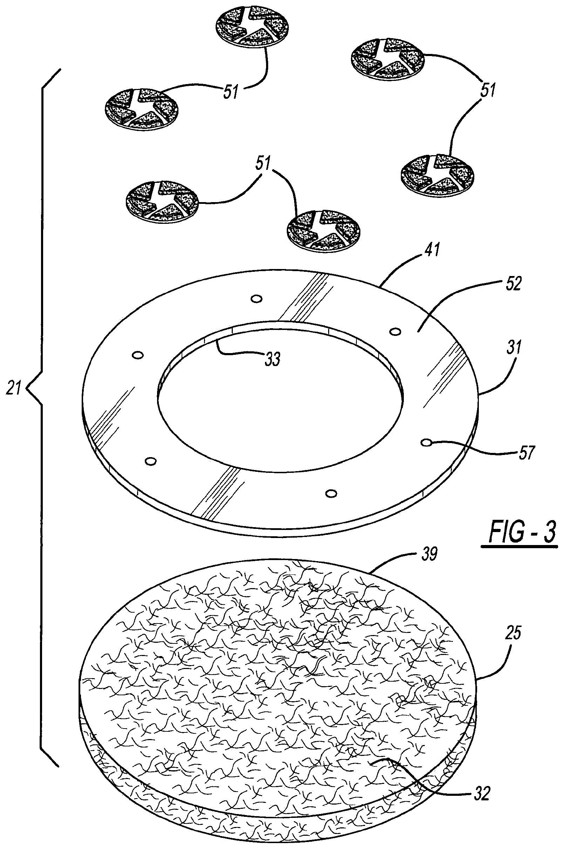

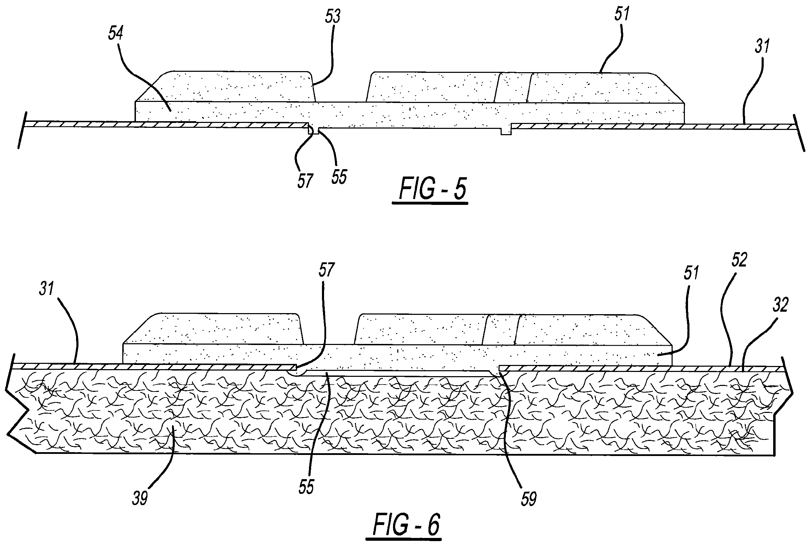

A preferred embodiment of a grinding pad apparatus 21 is shown in Figures 1 - 6. Pad apparatus 21 is used for grinding composite surfaces, such as concrete, stone or terrazzo floors 23. Grinding pad apparatus 21 includes a base pad 25, which is a flexible and deformable material, including natural and/or artificial fibers mixed with a polymeric resin. However, to save expense, base pad 25 preferably does not employ any diamond particles. Base pad 25 has a generally circular periphery, with a diameter of at least 7 inches (177.8 mm), more preferably 7 - 27 inches (117.8 mm - 685.8 mm), and most preferably 14 inches (355.6 mm), and a thickness of at least 0.25 inches (6.35 mm) and more preferably 0.5 - 2.0 inches (12.7 mm - 50.8 mm). Of course, base pad 25 could be made in other sizes.

A reinforcement ring 31 is secured to a bottom face or surface 32 of base pad 25, by a contact cement type of adhesive. Reinforcement ring 31 is generally annular having a central opening 33 with an inner diameter of approximately 9.5 inches (241.3 mm) and an outer diameter of approximately 14 inches (355.6 mm) for one version of the pad apparatus. Reinforcement ring 31 has a thickness greater than zero and up to 0.0304 inch (1 mm), and more preferably 0.0197 inch (0.5 mm). Reinforcement ring 31 is metallic and more preferably a high carbon 1095, hardened and tempered spring steel material. Reinforcement ring 31 reinforces and adds some radial stiffness and toughness to the outer portion of pad 25 to resist rotational centrifugal forces when grinding, however, ring 31 advantageously allows a significant amount of torsional and longitudinal flexibility and resilience to pad apparatus 21 so it can flex with and follow any floor imperfections thereby producing uniform disk-to-disk floor contact for grinding. This is especially beneficial when worn areas of the floor or cracks in the floor are otherwise encountered by only some disks but not others. Without the present flexible ring, conventional more rigid pad assemblies may not remove enough floor material during the very abrasive grinding operation, which is not as important for the finer grit polishing or honing operations, by way of comparison.

A circular internal edge 33 of reinforcement ring 31 defines a central opening or hole 35 which exposes a central surface 37 of base pad 25. This large diameter internal edge 33 allows for easier torsional flexure of the ring during use. Base pad 25 and ring 31 preferably have concentrically aligned circular peripheral surfaces 39 and 41, respectively.

A plurality of abrasive tools such as floor-contacting disks or dots 51 are secured to a bottom surface 52 of reinforcement ring 31. In the example shown, disks 51 are made of a sintered powdered metal composition of bronze, copper and iron, to which is added diamond particles. The diamond particles are very course for grinding, preferably having a grit size of 100 or less, and more preferably 24 - 50. Each disk includes a generally circular body 54 with an exemplary outer peripheral diameter of 2.123 inches (54 mm), a total height below reinforcement ring 31 of 0.00787 inch (5.0 mm) and a depth of groove 53 of 0.0131 inch (3.0 mm).

An optional and cylindrically shaped post 55 projects from a backside of each disk body 54 in a longitudinal direction substantially parallel to a rotational axis of the pad apparatus, and is integrally formed therewith as a single piece. Post 55 is approximately 0.394 inch (10.0 mm) wide and approximately 0.0591 inch (1.5 mm) long. Furthermore, post 55 projects through an aperture 57 pierced in ring 31. Multiple of the apertures are equally spaced apart in the ring. A distal end of post 55 is deformed to outwardly expand like a mushroom head thereby creating an enlarged head 59 which is laterally larger than aperture 57. Thus, ring 31 is sandwiched and compressed between head 59 and the backside of each disk 51 to mechanically attach and secure disks 51 to ring 31. Adhesive may additionally or instead be employed to attach and secure disks 51 to ring 31 with or without the posts, depending on the specific durability requirement and coarseness of the grit for grinding.

It is alternately envisioned that multiple parallel and spaced apart posts may project from each disk for insertion onto aligned apertures of the reinforcement ring. Moreover, it is alternately envisioned that one or more posts can have a generally polygonal shape, a flat side surface or a greater width in one lateral direction than another (e.g., a rectangle or oval). These alternate post configurations deter rotation of the disks relative to the attached reinforcement ring and base pad during grinding. In the example shown, six such disks 51 are secured about the circumference of reinforcement ring 51 in an equally spaced apart manner. The posts may be solid or at least partially hollow. Different sizes, a different quantity, and/or differently grooved disks may alternately be used. Furthermore, the ring apertures 57 are preferably circular but may alternately have one or more flat edges, or even be elongated slots in the inner or outer edges 33 and 41, respectively, of ring 31.

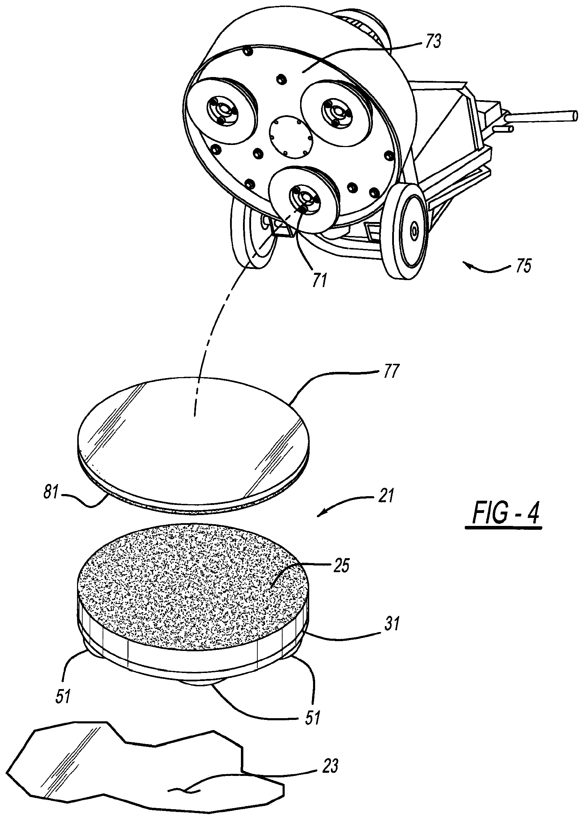

Figure 4 shows one of multiple grinding pad apparatuses 21 secured to a rotatable flanged hub 71 of a larger counter-rotating rotor 73 of an electric motor-powered floor grinding machine 75. A hard rubber or polymeric disk 77 includes a plurality of clips or bolt-receiving holes for releasably securing disk 77 to hub 71. A layer 81 of hook-and-loop-type hooks (e.g. Velcro®) may be secured to the bottom of disk 77 and can be removably secured to fibrous base pad 25, however, it is also envisioned that pad 25 may be directly attached to hub 71 in some constructions. A plurality of the grinding pad apparatuses are secured for rotation about a central axis of rotor 73. Alternate powered machines and pad attachments may be used, such as those disclosed in the Background section hereinabove. Also, the present pad apparatus 21 may be attached to a walk-behind or riding power-trowel machine which may be propane fuel powered.

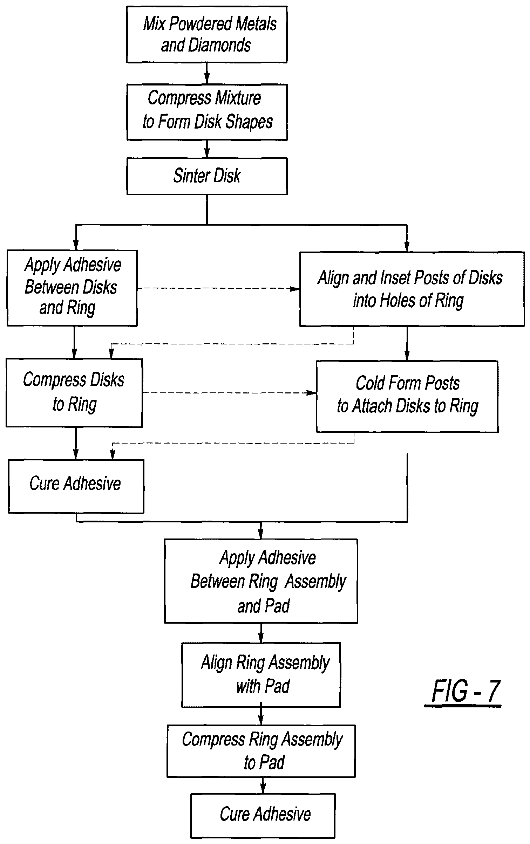

Grinding pad apparatus 21 is manufactured as illustrated in Figure 7. First, the powdered bronze, copper and iron are blended or mixed together in a vat along with the diamond particles. Second, the mixture is compressed within press to form the circular disk shape having a groove pattern on a bottom and the optional post on a top thereof. Third, this mixture is sintered or heated in an oven to about 700° C. Fourth, the spring steel reinforcement ring is stamped, cut or pierced to have its outer and inner circular edges, and its post-receiving apertures. Fifth, the adhesive is applied to one or both mating surfaces of the ring and disks. Sixth, if there are disk posts, then they are aligned with and inserted into their mating ring apertures. Seventh, the disks are compressed against the ring, and if the posts are present, then the heads are formed by cold forming or hammering. Eighth, the adhesive between the disks and ring cures in the compressed condition. Ninth, the ring assembly is aligned with the base pad. Tenth, adhesive is applied between the ring assembly and the base pad. Eleventh, the ring assembly is compressed to the base pad. And, finally, the adhesive between the ring assembly and the base pad is allowed to cure. It is preferred that the preceding steps are sequentially, or in some situations simultaneously, performed, however, the order of steps can be varied.

While various embodiments have been disclosed, it should be appreciated that additional variations of the pad assembly are also envisioned without departing from the scope of the appended claims. For example, while preferred dimensions and metallic materials have been disclosed hereinabove, it should alternately be appreciated that other dimensions and metallic materials may be employed. Moreover, circular peripheral shapes for the pad, reinforcement ring and disks are preferred, however, other arcuate or even generally polygonal peripheral shapes may be used although certain of the present advantages may not be fully realized. Alternate base pads 25 may be used, such as foam-rubber, felt or other such flexible materials.

## Claims

1. A pad apparatus (21) comprising:
(a) a rotatable flexible pad (25) including a top surface, a floor-facing bottom surface and a peripheral surface;
(b) a flexible reinforcement layer (31) attached to the bottom surface of the pad, wherein the reinforcement layer includes metallic material and
(c) abrasive grinding tools (51) attached to a floor-facing surface of the reinforcement layer; **characterized in that** the reinforcement layer is a ring having inner and outer edges, and a central portion of the pad is exposed through a hole defined by the inner edge of the ring.

2. The apparatus of Claim 1, wherein each of the tools comprises at least one mechanical fastener (55) projecting from a backside thereof.

3. The apparatus of Claim 2, wherein the fastener includes a post (55), each of the posts extending through an associated aperture (57) in the reinforcement layer, and a distal end of each of the posts is laterally expanded on an upper side of the reinforcement layer to mechanically attach the associated tool to the reinforcement layer.

4. The apparatus of any one of Claims 1 to 3, wherein the metallic material is flexible spring steel.

5. The apparatus of any one of Claims 1 to 4, wherein:
the pad includes fibers but is free of diamond particles; and
the metallic reinforcement layer is configured to provide radial stiffness and torsional flexibility such that one of the tools is capable of moving longitudinally relative to another of the tools.

6. The apparatus of any one of Claims 1 to 5, 6, wherein the tools are floor-contacting disks which include diamond particles with a grit size at or less than 100.

7. The apparatus of any one of Claims 1 to 6, wherein the tools are floor-contacting disks which include diamond particles and sintered powdered metal.

8. The apparatus of any one of Claims 1 to 7, wherein the pad comprises foam but is free of diamond particles.

9. The apparatus of any one of Claims 1 to 8, further comprising:
an electrically or fuel powered machine (75) adapted to simultaneously rotate multiples of the pad to grind a concrete, stone or terrazzo floor (23);
the reinforcement layer being configured to provide flexure so that all of the tools can contact the floor even when uneven floor conditions are encountered; and
the flexible metallic reinforcement layer having a thickness no greater than 1 mm.

10. A method of manufacturing a pad apparatus (21), the method comprising:
(a) attaching a flexible reinforcement layer (31) to a fibrous or foam-based pad (25), wherein the reinforcement layer includes metallic material; and
(b) attaching multiple floor-abrading tools (51) to the reinforcement by adhesive bonding and/or by deforming a connecting post (55); **characterized in that** the reinforcement layer is a ring having inner and outer edges, and a central portion of the pad is exposed through a hole defined by the inner edge of the ring.

11. The method of Claim 10, wherein the attaching step (b) comprises deforming a distal end of the post (55) to sandwich a portion of the reinforcement between the distal end and a backside of a tool body from which the post extends.

12. The method of any one of Claims 10 and 11, wherein:
the tools are disks which include sintered powdered metal and diamond particles; and
at least six of the disks are positioned equally spaced apart on the reinforcement.

13. The method of any one of Claims 10 to 12, further comprising creating multiple apertures (57) in the reinforcement, each of the apertures being aligned with the tools.

14. The method of any one of Claims 10 to 13, further comprising:
attaching the pad to an electrically or fuel powered machine (75) which is configured to rotate the pad to grind a concrete, stone or terrazzo floor (23).

## Patentansprüche

1. Kissenvorrichtung (21), umfassend:
(a) ein drehbares flexibles Kissen (25), das eine obere Oberfläche, eine bodenseitige untere Oberfläche und eine Umfangsfläche umfasst;
(b) eine flexible Verstärkungsschicht (31), die an der unteren Oberfläche des Kissens befestigt ist, wobei die Verstärkungsschicht metallisches Material umfasst; und
(c) Abrasionsschleifwerkzeuge (51), die auf einer bodenseitigen Oberfläche der Verstärkungsschicht befestigt sind; **dadurch gekennzeichnet, dass** die Verstärkungsschicht ein Ring mit Innen- und Außenkanten ist, und ein mittiger Abschnitt des Kissen durch ein Loch freigelegt ist, das durch Innenkante des Rings definiert ist.

2. Vorrichtung nach Anspruch 1, wobei jedes der Werkzeuge mindestens ein mechanisches Befestigungselement (55) umfasst, das von einer Rückseite davon vorsteht.

3. Vorrichtung nach Anspruch 2, wobei das Befestigungsmittel ein Stift (55) ist, wobei jeder der Stifte sich durch eine zugehörige Öffnung (57) in der Verstärkungsschicht erstreckt, und ein distales Ende eines jeden der Stifte auf einer Oberseite der Verstärkungsschicht lateral erweitert ist, um das zugehörige Werkzeug mechanisch an der Verstärkungsschicht zu befestigen.

4. Vorrichtung nach einem der Ansprüche 1 bis 3, wobei das metallische Material flexibler Federstahl ist.

5. Vorrichtung nach einem der Ansprüche 1 bis 4, wobei:
das Kissen Fasern umfasst, aber frei von Diamantteilchen ist; und
die metallische Verstärkungsschicht so ausgebildet ist, dass sie radiale Steifigkeit und Drehelastizität bereitstellt, derart dass eines der Werkzeuge zu Längsbewegung in Bezug auf ein anderes der Werkezuge imstande ist.

6. Verfahren nach einem der Ansprüche 1 bis 5, wobei die Werkzeuge Bodenkontaktscheiben sind, die Diamantteilchen mit einer Korngröße von 100 oder weniger umfassen.

7. Verfahren nach einem der Ansprüche 1 bis 6, wobei die Werkzeuge Bodenkontaktscheiben sind, die Diamantteilchen und Sintermetallpulver umfassen.

8. Verfahren nach einem der Ansprüche 1 bis 7, wobei das Kissen Schaumstoff umfasst, aber frei von Diamantteilchen ist.

9. Vorrichtung nach einem der Ansprüche 1 bis 8, ferner umfassend:
eine elektrisch oder kraftstoffbetriebene Maschine (75), die so ausgelegt ist, dass sie mehrere des Kissens zum Schleifen eines Beton-, Stein- oder Terrazzobodens (23) gleichzeitig dreht;
wobei die Verstärkungsschicht so ausgebildet ist, dass sie Biegsamkeit bereitstellt, so dass alle der Werkzeuge selbst bei Vorliegen von Bodenunebenheitsbedingungen den Boden berühren können; und
die flexible metallische Verstärkungsschicht eine Dicke von höchstens 1 mm aufweist.

10. Verfahren zur Herstellung einer Kissenvorrichtung (21), wobei das Verfahren umfasst:
(a) Befestigen einer flexiblen Verstärkungsschicht (31) an einem fasrigen oder schaumstoffbasierten Kissen (25), wobei die Verstärkungsschicht metallisches Material umfasst; und
(b) Befestigen mehrerer Bodenschleifwerkzeuge (51) an der Verstärkung durch Aufkleben und/oder durch Verformen eines Verbindungstifts (55); **dadurch gekennzeichnet, dass** die Verstärkungsschicht ein Ring mit Innen- und Außenkanten ist, und ein mittiger Abschnitt des Kissen durch ein Loch freigelegt wird, das durch Innenkante des Rings definiert wird.

11. Verfahren nach Anspruch 10, wobei der Befestigungsschritt (b) ein Verformen eines distalen Endes des Stifts (55) umfasst, um einen Abschnitt der Verstärkung zwischen dem distalen Ende und einer Rückseite eines Werkzeugkörpers, von welchem sich der Stift erstreckt, sandwichartig einzuklemmen.

12. Verfahren nach einem der Ansprüche 10 und 11, wobei:
die Werkzeuge Scheiben sind, die Sintermetallpulver und Diamantteilchen umfassen; und
mindestens sechs der Scheiben in gleichen Abständen voneinander auf der Verstärkung positioniert werden.

13. Verfahren nach einem der Ansprüche 10 bis 12, ferner umfassend ein Bilden mehrerer Öffnungen (57) in der Verstärkung, wobei jede der Öffnungen mit den Werkzeugen ausgerichtet wird.

14. Verfahren nach einem der Ansprüche 10 bis 13, ferner umfassend:
Befestigen des Kissens an einer elektrisch oder kraftstoffbetriebenen Maschine (75), die so ausgelegt ist, dass sie das Kissen zum Schleifen eines Beton-, Stein- oder Terrazzoboden (23) dreht.

## Revendications

1. Appareil de tampon (21) comprenant :
(a) un tampon souple rotatif (25) comprenant une surface supérieure, une surface inférieure tournée vers le plancher et une surface périphérique ;
(b) une couche de renfort souple (31) fixée à la surface inférieure du tampon, la couche de renfort comprenant un matériau métallique et
(c) des outils de polissage abrasifs (51) fixés à une surface de la couche de renfort faisant face au plancher ;
**caractérisé en ce que** la couche de renfort est un anneau ayant des bords intérieur et extérieur, et **en ce qu'**une partie centrale du tampon est exposée à travers un trou défini par le bord intérieur de l'anneau.

2. Appareil selon la revendication 1, chacun des outils comprenant au moins un élément de fixation mécanique (55) faisant saillie à partir d'une face arrière de celui-ci.

3. Appareil selon la revendication 2, l'élément de fixation comprenant un montant (55), chacun des montants s'étendant à travers une ouverture associée (57) dans la couche de renfort, et une extrémité distale de chacun des montants étant élargie latéralement sur un côté supérieur de la couche de renfort pour fixer mécaniquement l'outil associé à la couche de renfort.

4. Appareil selon l'une quelconque des revendications 1 à 3, le matériau métallique étant de l'acier à ressort souple.

5. Appareil selon l'une quelconque des revendications 1 à 4,
le tampon comprenant des fibres mais étant exempt de particules de diamant ; et
la couche de renfort métallique étant configurée pour fournir une rigidité radiale et une flexibilité en torsion de telle sorte qu'un des outils peut se déplacer longitudinalement par rapport à un autre des outils.

6. Appareil selon l'une quelconque des revendications 1 à 5, les outils étant des disques en contact avec le plancher qui comprennent des particules de diamant ayant une taille de grains égale ou inférieure à 100.

7. Appareil selon l'une quelconque des revendications 1 à 6, les outils étant des disques en contact avec le plancher qui comprennent des particules de diamant et du métal en poudre frittée.

8. Appareil selon l'une quelconque des revendications 1 à 7, le tampon comprenant de la mousse mais étant exempt de particules de diamant.

9. Appareil selon l'une quelconque des revendications 1 à 8, comprenant en outre :
une machine alimentée en électricité ou en carburant (75), adaptée pour faire tourner simultanément de multiples tampons afin de polir un plancher en béton, en pierre ou en terrazzo (23) ;
la couche de renfort étant configurée pour fournir une flexion de sorte que tous les outils puissent entrer en contact avec le plancher même lorsque des conditions d'irrégularité de plancher sont rencontrées ; et
la couche de renfort métallique souple ayant une épaisseur ne dépassant pas 1 mm.

10. Procédé de fabrication d'un appareil de tampon (21), le procédé comprenant :
(a) la fixation d'une couche de renfort souple (31) à un tampon (25) fibreux ou à base de mousse, la couche de renfort comprenant un matériau métallique ; et
(b) la fixation de multiples outils d'abrasion de plancher (51) au renfort par liaison adhésive et/ou par déformation d'un montant de raccordement (55) ;
**caractérisé en ce que** la couche de renfort est un anneau ayant des bords intérieur et extérieur, et **en ce qu'**une partie centrale du tampon est exposée à travers un trou défini par le bord intérieur de l'anneau.

11. Procédé selon la revendication 10, l'étape de fixation (b) comprenant la déformation d'une extrémité distale du montant (55) pour intercaler une partie du renfort entre l'extrémité distale et une face arrière d'un corps d'outil à partir duquel le montant s'étend.

12. Procédé selon l'une quelconque des revendications 10 et 11,
les outils étant des disques qui comprennent des particules de métal et de diamant en poudre frittée ; et
au moins six des disques étant positionnés à égale distance les uns des autres sur le renfort.

13. Procédé selon l'une quelconque des revendications 10 à 12, comprenant en outre la création de multiples ouvertures (57) dans le renfort, chacune des ouvertures étant alignée avec les outils.

14. Procédé selon l'une quelconque des revendications 10 à 13, comprenant en outre :
la fixation du tampon à une machine alimentée en électricité ou en carburant (75), qui est configurée pour faire tourner le tampon afin de polir un plancher en béton, en pierre ou en terrazzo (23).
